# EUROPEAN PATENT APPLICATION

(11) **EP 4 687 362 A1**
(43) Date of publication of application: **04.02.2026**
(21) Application number: 25192362.9
(22) Date of filing: 29.07.2025
(51) Int. Cl.: H04W 24/10

(54) **SYSTEM AND METHOD FOR REPORTING LOW POWER WAKE-UP RECEIVER NOISE FIGURE**

(30) Priority: 30.07.2024 US 202463676957 P; 24.07.2025 US 202519279395
(71) Applicant: Samsung Electronics Co., Ltd., Suwon-si, Gyeonggi-do 16677 (KR)
(72) Inventor: HOSSEINIAN, Seyed Mohsen, San Jose, CA, 95134 (US); SARTORI, Philippe Jean Marc Michel, San Jose, CA, 95134 (US); FOUAD, Yaser Mohamed Mostafa Kamal, San Jose, CA, 95134 (US)
(74) Representative: Kuhnen & Wacker Patent- und Rechtsanwaltsbüro PartG mbB

(57) **Abstract**

A system and a method are disclosed for reporting LP-WUR noise figures. A method performed by a UE (100) supporting an LP-WUS includes establishing a connection with a network device; and providing, to the network device, an indication of a noise figure value of an LP-WUR (104) included in the UE (100).

## Description

### TECHNICAL FIELD

The disclosure generally relates to operations of a low power wake-up radio (LP-WUR). More particularly, the subject matter disclosed herein relates to improvements to low power wake-up signal (LP-WUS) transmission based on LP-WUR noise figures.

### SUMMARY

User equipment (UE) energy efficiency is an important aspect of prolonging battery life as well as the life of a UE device itself in some cases (e.g., machine type communication (MTC) or internet of things (IoT)).

To enhance UE energy efficiency, an LP-WUR has been provided to assist a main radio (MR) and allow a UE device to enter into a deep sleep mode for power saving. A general principle of power saving through using an LP-WUR includes using two radios on a chip. More specifically, one radio is an LP-WUR with a sole objective to wake-up the second radio (i.e., the more capable and power consuming MR) after a wake-up signal, i.e., an LP-WUS signal, is received by the LP-WUR. In other words, the MR will be turned on upon the LP-WUR receiving an LP-WUS signal. Since the LP-WUS signal may use a relatively lower complexity modulation scheme than the MR, the LP-WUR receiver can be designed to have much lower power consumption than the MR. With the addition of the LP-WUR, the MR fundamentally becomes event driven, such that the MR consumes power only when it is needed.

In 3^{rd} generation partnership project (3GPP) release 19, an LP-WUS is being standardized to allow an MR to enter an ultra-deep sleep mode based on the presence of an LP-WUR monitoring the wake-up signal. This signal may include an on-off keying (OOK) signal with an overlaid orthogonal frequency-division multiplexing (OFDM) sequence. Depending on a type of an LP-WUR, some UEs are able to decode only the OOK signal while others can decode both OOK and overlaid OFDM sequences. Nevertheless, all UEs should be able to decode the LP-WUS. LP-WURs that can decode both OOK and overlaid OFDM sequence may be referred to as OFDM-based LP-WUR, whereas LP-WURs that can only decode OOK may be referred to as OOK-based LP-WUR.

Different LP-WUR architectures and designs have different noise figure values. The noise figure value of an LP-WUR has an immediate impact on the LP-WUR sensitivity. For example, a noise figure value can have a range of 2 dB to 8 dB on top of an MR noise figure, which is often around 7 dB.

3GPP release 19 is also expected to provide a network with the ability to include several UEs in one group and send an LP-WUS to the UEs of the group at the same time. The LP-WUS payload may be source coded too.

In order to enhance the coverage of an LP-WUS and decrease false alarm rate, the network may include UEs having similar receiver sensitivity, in the same LP-WUS group and correspondingly use the appropriate code rate for source coding the LP-WUS payload. However, in order to properly group the UEs, mechanisms are needed to inform the network of an LP-WUR noise figure for each UE.

To overcome these issues, systems and methods are described herein for a UE to report its LP-WUR noise figure to a network.

The above approaches improve on previous methods by enhancing coverage of an LP-WUS and decreasing false alarm rate. That is, the network may group UEs with similar noise figures and therefore receiver sensitivity, in the same LP-WUS group and correspondingly use the appropriate code rate for source coding the LP-WUS payload.

In an embodiment, a method performed by a UE supporting an LP-WUS comprises establishing a connection with a network device; and providing, to the network device, an indication of a noise figure value of an LP-WUR included in the UE.

In an embodiment, a UE supporting an LP-WUS comprises an LP-WUR; and a processor configured to establish a connection with a network device, and provide, to the network device, an indication of a noise figure value of the LP-WUR included in the UE.

In an embodiment, a method performed by a network device supporting an LP-WUS comprises establishing a connection with a UE including an LP-WUR; and receiving, from the UE, an indication of a noise figure value of the LP-WUR included in the UE.

In an embodiment, a network device supporting an LP-WUS comprises a transceiver; and a processor configured to establish a connection with a UE including an LP-WUR, and receive, from the UE, an indication of a noise figure value of the LP-WUR included in the UE.

### BRIEF DESCRIPTION OF THE DRAWING

In the following section, the aspects of the subject matter disclosed herein will be described with reference to exemplary embodiments illustrated in the figures, in which:
FIG. 1 illustrates an example of a UE including an LP-WUR, according to an embodiment;
FIG. 2 is a signal flow diagram illustrating a UE reporting an LP-WUR noise figure as a UE feature, according to an embodiment;
FIG. 3 is a flow chart illustrating a UE method of providing an LP-WUR noise figure as a UE feature, according to an embodiment;
FIG. 4 is a flow chart illustrating a network method of receiving an LP-WUR noise figure as a UE feature, according to an embodiment;
FIG. 5 is a flow chart illustrating a UE method of providing an LP-WUR noise figure using dedicated radio resource control (RRC) signaling, according to an embodiment;
FIG. 6 is a flow chart illustrating a network method of receiving an LP-WUR noise figure using dedicated RRC signaling, according to an embodiment;
FIG. 7 is a flow chart illustrating a network method of sending an LP-WUS to a group of UEs, according to an embodiment;
FIG. 8 is a block diagram of an electronic device in a network environment, according to an embodiment; and
FIG. 9 shows a system including a UE and a gNB in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

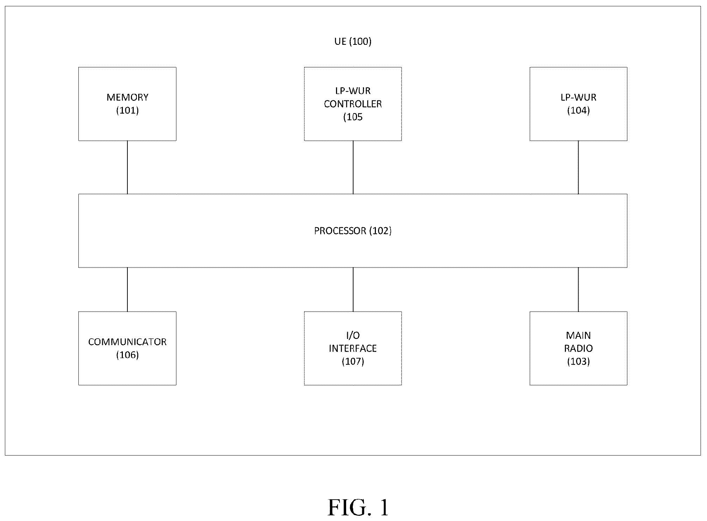

FIG. 1 illustrates an example of a UE including an LP-WUR, according to an embodiment.

Referring to FIG. 1, the UE (100) includes a processor (102), a memory (101), an input/output (I/O) interface (107), an LP-WUR support controller (105), an LP-WUR (104), a communicator (106), and an MR (103).

In an embodiment, the UE (100) acts as an end-user device is capable of connecting to the wireless communication network system for the purpose of accessing services. This device can take various forms, including but not limited to a mobile phone, a smart phone, tablets, laptops, and IoT devices. Essentially, any device that can connect to the wireless communication network system and access services can be considered a UE (100).

Further, the processor (102) communicates with the memory (101), the I/O interface (107), the LP-WUR support controller (105), the LP-WUR (104), the communicator (106) and the MR (103). The processor (102) can include one or a plurality of processors, can be a general-purpose processor, such as a central processing unit (CPU), an application processor (AP), or the like, a graphics-only processing unit such as a graphics processing unit (GPU), a visual processing unit (VPU), and/or an artificial intelligence (AI) dedicated processor such as a neural processing unit (NPU). Further, the memory (101) of the UE (100) includes storage locations to be addressable through the processor (102). The memory (101) is not limited to a volatile memory (101) and/or a non-volatile memory (101). Further, the memory (101) can include one or more computer-readable storage media. The memory (101) can include non-volatile storage elements. For example, non-volatile storage elements can include magnetic hard discs, optical discs, floppy discs, flash memories, or forms of electrically programmable memories (EPROM) or electrically erasable and programmable (EEPROM) memories.

The I/O interface (107) serves as the intermediary for transmitting information between the memory (101) and external peripheral devices, which are the input-output devices associated with the UE (100). This interface (107) may receive multiple information from the network, and also possesses additional resources such as voltage translators, registers, impedances, and buffers. For example, input devices such as a keyboard and mouse provide data to the computer, while output devices such as a monitor and printer display and print information respectively.

In an embodiment, the LP-WUR support controller (105) is hardware that is implemented through the physical implementation of both analog and digital circuits, including logic gates, integrated circuits, microprocessors, microcontrollers, memory circuits, passive and active electronic components, as well as optical components.

In an embodiment, the LP-WUR support controller (105) is connected to the memory (101) and the processor (102). The LP-WUR support controller (105) detects that the UE (100) is in an idle state or inactive state and the MR (103) of the UE (100) is moved to an OFF state or a sleep state. Further the LP-WUR support controller (105) determines whether the LP-WUR (104) configuration is configured by the network apparatus in the wireless communication network system for the LP-WUR (104) of the UE (100) to monitor for the Wake-up indication from the network apparatus, when the UE (100) is in the idle state or inactive state. Further LP-WUR support controller (105) receives the wake-up indication from the network apparatus and transmit the wake-up indication to the MR (103) of the UE (100) to move the MR (103) from the OFF state of the sleep state to an ON state.

Although illustrated as separate components in FIG. 1, the LP-WUR support controller (105) determines whether the LP-WUR (104) may embodied together as a single component.

As described above, it is expected that 3GPP release 19 will provide the ability for the network, e.g., a gNB, to include several UEs in one group and send an LP-WUS to the UEs of the group at the same time. Further, as different LP-WUR architectures and designs have different noise figure values, to enhance the coverage of an LP-WUS and decrease false alarm rate, the network may include UEs with similar receiver sensitivities in the same LP-WUS group and correspondingly use an appropriate code rate for source coding the LP-WUS payload. Accordingly, in order to properly group the UEs with similar receiver sensitivities, the network should know the LP-WUR noise figure for each of the UEs.

In accordance with embodiments of the disclosure, a UE may report LP-WUR noise figure as a UE feature or using an RRC message.

### UE reports LP-WUR noise figure as a UE feature

In an embedment, a UE can indicate its noise figure is by reporting it when the UE indicates its UE capabilities during network access. For example, the UE can indicate that it supports an LP-WUS, and indicate its noise figure (or noise factor) as a component.

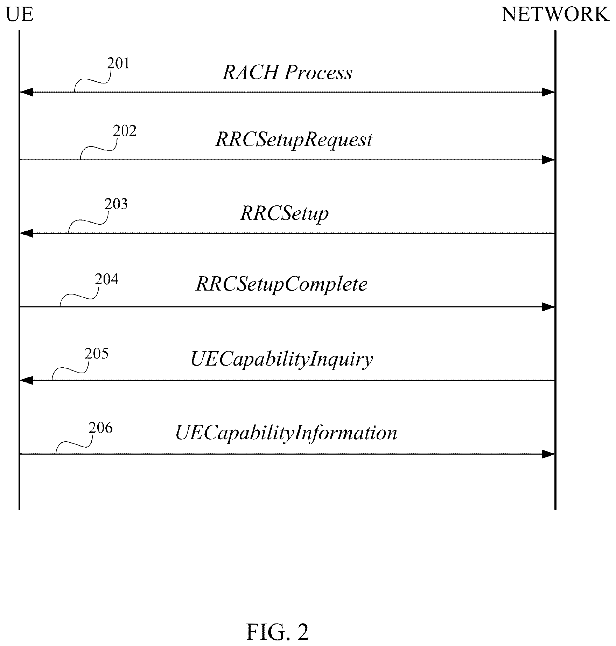

FIG. 2 is a signal flow diagram illustrating a UE reporting an LP-WUR noise figure as a UE feature, according to an embodiment.

Referring to FIG. 2, in step 201, the UE and the network perform a random access channel (RACH), e.g., 4-step or 2-step RACH, for the UE to enter the enter the system. After receiving Msg4 (or MsgB), thereby completing the RACH process 201, the UE is on the system.

In step 202, in order to switch to an RRC_CONNECTED mode, the UE transmits an *RRCSetupRequest* message to the network.

In step 203, the network transmits an *RRCSetup* message to the UE.

In step 204, the UE transmits an *RRCSetupComplete* message to the network, and the UE is now in the RRC_CONNECTED mode.

Once the UE is in RRC_CONNECTED mode, the network may probe the UE to request UE capabilities.

More specifically, in step 205, the network transmits a *UECapabilityInquiry* message to the UE, requesting capability information from the UE. In response, in step 206, the UE transmits a *UECapabilityInformation* message, e.g., including information indicating that the UE supports receiving an LP-WUS and indicating a noise figure of the UE.

Thus, a new capability can be exchanged, and added in the *UECapabilityInformation* message to indicate the UE noise figure.

Table 1 below provide an example of UE capability for noise figure signaling. Specifically, in Table 1, the noise figure is indicated in the main LP-WUS UE capability. In this example, only the components related to the LP-WUS and noise figure of the UE are shown. However, other information may also be present (e.g., support of OOK-1 modulation). Additionally, the candidate values indicated for the noise figure in Table 1 are examples only. That is, the present disclosure is not limited to these candidate values.

**Table 1**

| | | | | | | | | | | | | | |
|---|---|---|---|---|---|---|---|---|---|---|---|---|---|
| XX. LP-WUS | XX-1 | Receiving LP-WUS signals | 1. UE supports receiving LP-WUS | | | | UE does not support LP-WUS reception | | | | | Candidate values for NF are {6, 8, 10, 12, 14, 16, 18} | Optional without capability signaling |
| | | | 2. UE has a noise figure of *NF* dB | | | | | | | | | | For UE with LP-WUR, UE should support this FG. |

Table 2 below provides another example wherein a noise figure reported as a standalone UE capability.

**Table 2**

| | | | | | | | | | | | | | |
|---|---|---|---|---|---|---|---|---|---|---|---|---|---|
| XX. LP-WUS | XX-k | UE reports LP-WUR noise figure | 1. UE has a noise figure of *NF* dB | | | | UE cannot report its noise figure | | | | | Candidate values for NF are {6, 8, 10, 12, 14, 16, 18} | Optional without capability signaling |

As another example, a UE may report its LP-WUR characteristics, e.g., the UE could indicate in a feature group whether it is homodyne/heterodyne/zero intermediate frequency (ZIF), envelope detector/FM receptor, etc. One of the components may then be the noise figure, which may have a format similar as in Tables 1 and 2.

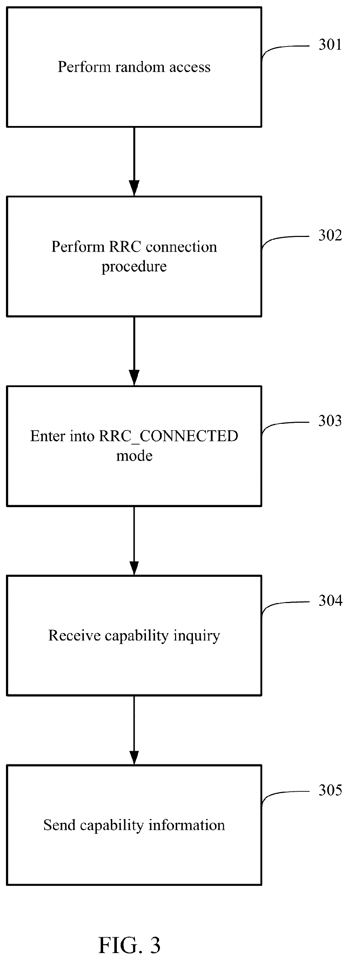

FIG. 3 is a flow chart illustrating a UE method of providing an LP-WUR noise figure as a UE feature, according to an embodiment.

Referring to FIG. 3, in step 301, the UE performs a random access procedure with the network, e.g., 4-step or 2-step RACH.

In step 302, the UE performs an RRC connection procedure with the network, e.g., steps 202 to 204 in FIG. 2.

In step 303, upon completion of the RRC connection procedure, the UE enters into an RRC_CONNECTED mode.

In step 304, the UE receives a capability inquiry, e.g., a *UECapabilityInquiry* message, from the network.

In step 305, in response to the capability inquiry, the UE sends capability information, e.g., *UECapabilityInformation* message, to the network.

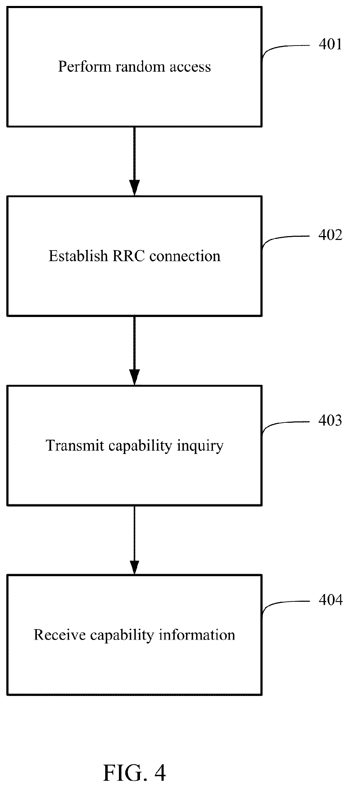

FIG. 4 is a flow chart illustrating a network method of receiving an LP-WUR noise figure as a UE feature, according to an embodiment.

Referring to FIG. 4, in step 401, the network performs a random access procedure with a UE, e.g., 4-step or 2-step RACH.

In step 402, the network performs an RRC connection procedure with the UE, e.g., steps 202 to 204 in FIG. 2.

In step 403, after the UE enters into an RRC_CONNECTED mode, the network transmits a capability inquiry, e.g., a *UECapabilityInquiry* message, to the UE.

In step 404, in response to the capability inquiry, the network receives capability information, e.g., *UECapabilityInformation* message, from the UE.

Although FIGs. 3 and 4 illustrate methods in which a UE enters the system (i.e., performs random access), enters into RRC_CONNECTED mode, and then provides capability information, the capability exchange (i.e., the last two steps in each figure) can be performed anytime the UE is in an RRC_CONNECTED mode. That is, the network, e.g., a gNB, may send a *UECapabilityInquiry* message whenever it deems suitable, as long as the UE is in an RRC_CONNECTED mode.

### UE reports LP-WUR noise figure using RRC message

As described above, a network may request a noise figure in order to group UEs with similar noise figures in the same group, so that the same coding level can be applied. Thus, according to embodiment, a dedicated RRC signaling exchange may be performed for communicating a noise figure.

Accordingly to an embodiment, two RRC messages may be utilized.

*LPWUR-NFRequest*: this message is sent by the gNB to the UE to request the UE to send its noise figure for the LP-WUR. This message should include the UE identity.

*LPWUR-NFResponse*: this message is sent by the UE to the gNB to report its noise figure. This message may include the UE identity and the noise figure.

In an embodiment, the noise figure may be encoded in various ways, such as:
- The absolute noise figure value, expressed in dBs, as an integer or a float.
- An index referring to a lookup table to indicate the noise figure value, e.g., index '0' could correspond to 6 dB, '1' to 8 dB, etc. The lookup table should be known by the UE, and may be hardcoded according to the standard or communicated to the UE, either in a request message or another RRC message.
- A value referring to a range of noise figures, e.g., 'Quality' could refer to a range of [4dB, 8 dB] for the noise figure, 'MediumQuality' to [8dB, 12 dB], 'LowQuality' to larger than 12 dB.

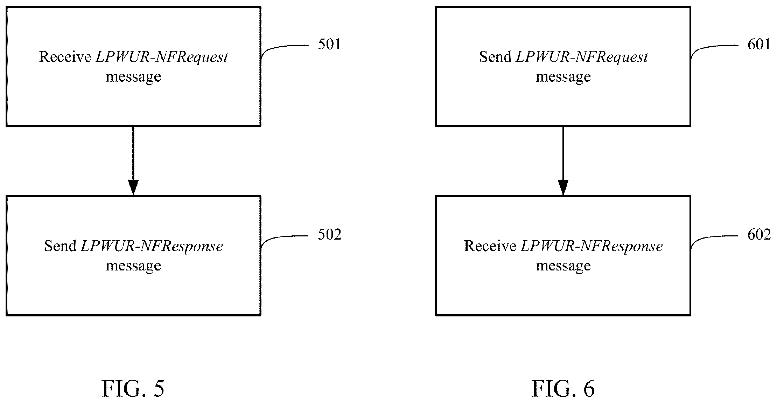

FIG. 5 is a flow chart illustrating a UE method of providing an LP-WUR noise figure using dedicated radio resource control (RRC) signaling, according to an embodiment.

Referring to FIG. 5, in step 501, the UE receives an *LPWUR-NFRequest* message from the network, requesting the UE to send its noise figure for its LP-WUR. As described above, this message should include the UE identity.

In step 502, the UE sends an *LPWUR-NFResponse* message to the network, reporting the noise figure for its LP-WUR.

FIG. 6 is a flow chart illustrating a network method of receiving an LP-WUR noise figure using dedicated RRC signaling, according to an embodiment.

Referring to FIG. 6, in step 601, the network sends an *LPWUR-NFRequest* message to a UE, requesting the UE to send its noise figure for its LP-WUR. As described above, this message should include the UE identity.

In step 602, the network receives an *LPWUR-NFResponse* message from the UE, reporting the noise figure for its LP-WUR.

In accordance with the above-described embodiments, after receiving a noise figure for a UE's LP-WUR, the network, e.g., a gNB, may appropriate group the UE with other UEs having similar LP-WUR noise figures, and may efficiently send an LP-WUS to the UEs of the group at the same time.

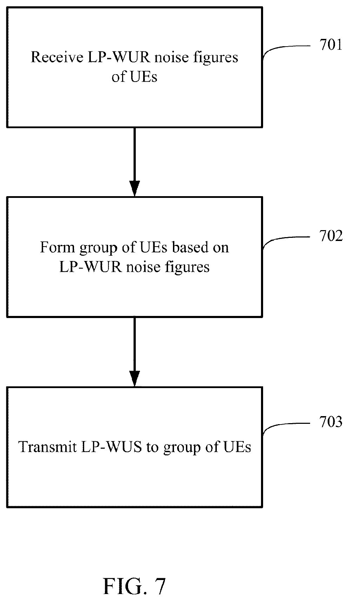

FIG. 7 is a flow chart illustrating a network method of sending an LP-WUS to a group of UEs, according to an embodiment.

Referring to FIG. 7, in step 701, the network, e.g., a gNB, receives LP-WUR noise figures for each of a plurality of UEs. For example, the network may receive the LP-WUR noise figures using the above described methods of FIGs. 2, 3, 4, 5, and/or 6.

In step 702, the network forms a group of UEs from among the plurality of UEs based on their respective LP-WUR noise figures. That is, each of the UEs in the group has a same or similar LP-WUR noise figure.

In step 703, the network transmits an LP-WUS to the UEs of the group at the same time.

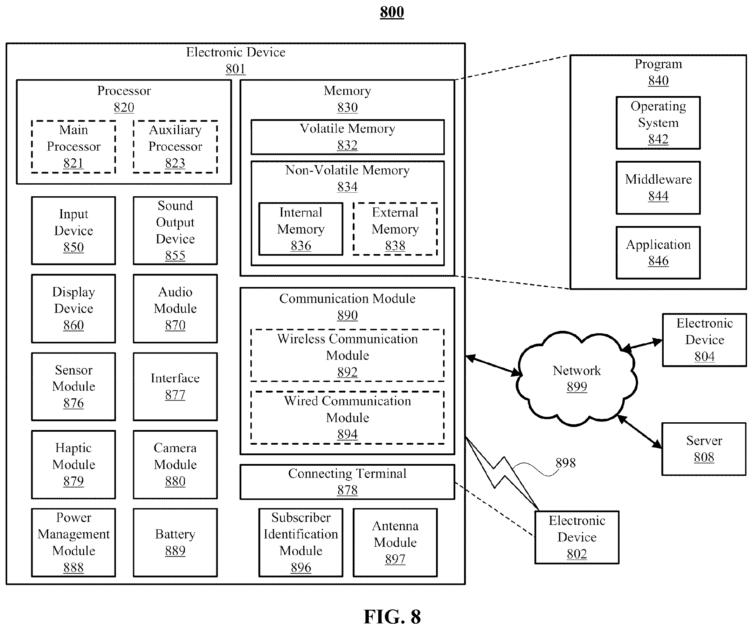

FIG. 8 is a block diagram of an electronic device in a network environment 800, according to an embodiment.

Referring to FIG. 8, an electronic device 801 in a network environment 800 may communicate with an electronic device 802 via a first network 898 (e.g., a short-range wireless communication network), or an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 850, a sound output device 855, a display device 860, an audio module 870, a sensor module 876, an interface 877, a haptic module 879, a camera module 880, a power management module 888, a battery 889, a communication module 890, a subscriber identification module (SIM) card 896, or an antenna module 897. In one embodiment, at least one (e.g., the display device 860 or the camera module 880) of the components may be omitted from the electronic device 801, or one or more other components may be added to the electronic device 801. Some of the components may be implemented as a single integrated circuit (IC). For example, the sensor module 876 (e.g., a fingerprint sensor, an iris sensor, or an illuminance sensor) may be embedded in the display device 860 (e.g., a display).

The processor 820 may execute software (e.g., a program 840) to control at least one other component (e.g., a hardware or a software component) of the electronic device 801 coupled with the processor 820 and may perform various data processing or computations. For example, the processor 820 may execute software to perform the above-described methods of FIGs. 2, 3, and 5.

As at least part of the data processing or computations, the processor 820 may load a command or data received from another component (e.g., the sensor module 876 or the communication module 890) in volatile memory 832, process the command or the data stored in the volatile memory 832, and store resulting data in non-volatile memory 834. The processor 820 may include a main processor 821 (e.g., a CPU or an AP), and an auxiliary processor 823 (e.g., a GPU, an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834. Non-volatile memory 834 may include internal memory 836 and/or external memory 838.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. The display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. The audio module 870 may obtain the sound via the input device 850 or output the sound via the sound output device 855 or a headphone of an external electronic device 802 directly (e.g., wired) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device 802 directly (e.g., wired) or wirelessly. The interface 877 may include, for example, a high- definition multimedia interface (HDMI), a universal serial bus (USB) interface, a secure digital (SD) card interface, or an audio interface.

A connecting terminal 878 may include a connector via which the electronic device 801 may be physically connected with the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes. The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the AP) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). Although not illustrated in FIG. 8, the wireless communication module 892 may include an MR and an LP-WUR.

A corresponding one of these communication modules may communicate with the external electronic device via the first network 898 (e.g., a short-range communication network, such as BLUETOOTH^{™}, wireless-fidelity (Wi-Fi) direct, or a standard of the Infrared Data Association (IrDA)) or the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

Commands or data may be transmitted or received between the electronic device 801 and the external electronic device 804 via the server 808 coupled with the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

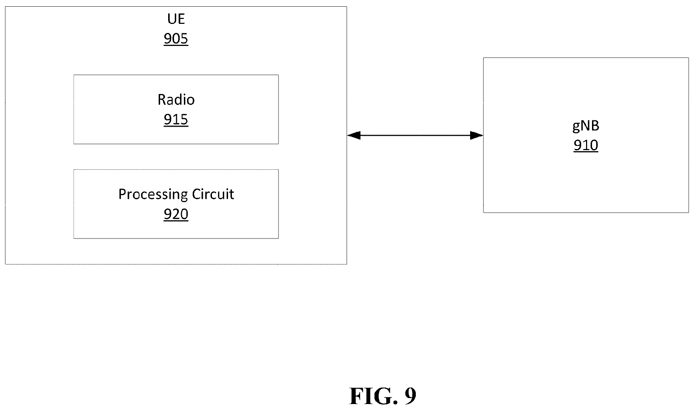

FIG. 9 shows a system including a UE 905 and a gNB 910, in communication with each other. The UE may include a radio 915, e.g., an MR and an LP-WUR, and a processing circuit (or a means for processing) 920, which may perform various methods disclosed herein, e.g., the method illustrated in FIGs. 2, 3, and 5. For example, the processing circuit 920 may receive, via the radio 915, transmissions from the network node (gNB) 910, and the processing circuit 920 may transmit, via the radio 915, signals to the gNB 910.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

## Claims

1. A method performed by a user equipment, UE (100), supporting a low power wake-up signal, LP-WUS, the method comprising:
establishing a connection with a network device; and
providing, to the network device, an indication of a noise figure value of a low power wake-up radio, LP-WUR (104), included in the UE (100).

2. The method of claim 1, wherein providing the indication of the noise figure value of the LP-WUR (104) included in the UE comprises reporting the noise figure value to a network as a UE (100) capability.

3. The method of claim 1 or 2, wherein providing the indication of the noise figure value of the LP-WUR (104) included in the UE comprises transmitting the noise figure value to a network using radio resource control, RRC, signaling.

4. The method of claim 3, wherein the RRC signaling includes an *LPWUR-NFResponse* message.

5. The method of any one of claims 1 to 4, further comprising receiving, from the network, a request for the noise figure value of the LP-WUR (104) included in the UE (100).

6. The method of claim 5, wherein the request for the noise figure value of the LP-WUR (104) included in the UE includes an *LPWUR-NFRequest* message and/or a *UECapabilityInquiry* message.

7. The method of any one of claims 1 to 6, wherein the indication of the noise figure value of the LP-WUR (104) included in the UE includes a *UECapabilityInformation* message.

8. The method of any one of claims 1 to 7, wherein the UE (100) is grouped, by the network device, with at least one other UE (100) having a similar noise figure value of an LP-WUR (104) included therein, based on the indication of the noise figure value of the LP-WUR (104) included in the UE (100).

9. A user equipment, UE (100), supporting a low power wake-up signal, LP-WUS, the UE (100) comprising:
a low power wake-up radio, LP-WUR; and
a processor (102) configured to:
establish a connection with a network device, and
provide, to the network device, an indication of a noise figure value of the LP-WUR (104) included in the UE (100).

10. A method performed by a network device supporting a low power wake-up signal, LP-WUS, the method comprising:
establishing a connection with a user equipment, UE (100), including a low power wake-up radio, LP-WUR; and
receiving, from the UE (100), an indication of a noise figure value of the LP-WUR (104) included in the UE (100).

11. The method of claim 10, wherein receiving the indication of the noise figure value of the LP-WUR (104) included in the UE comprises receiving the noise figure value from the UE (100) as a UE capability report.

12. The method of claim 10 or 11, wherein receiving the indication of the noise figure value of the LP-WUR (104) included in the UE comprises receiving the noise figure value from the UE (100) using radio resource control, RRC, signaling.

13. The method of claim 12, wherein the RRC signaling includes an *LPWUR-NFResponse* message.

14. The method of any one of claims 10 to 13, further comprising transmitting, to the UE (100), a request for the noise figure value of the LP-WUR (104) included in the UE (100).

15. A network device supporting a low power wake-up signal, LP-WUS, the network device comprising:
a transceiver; and
a processor configured to:
establish a connection with a user equipment, UE (100), including an LP-WUR (104), and
receive, from the UE (100), an indication of a noise figure value of the LP-WUR (104) included in the UE (100).
